# EUROPEAN PATENT SPECIFICATION

(11) **EP 1 091 575 B1**
(45) Date of publication and mention of the grant of the patent: **17.11.2010**
(21) Application number: 00308714.5
(22) Date of filing: 04.10.2000
(51) Int. Cl.: H04N 5/445

(54) **Improvements relating to an electronic programme guide**
Verbesserungen für einen elektronischen Programmführer
Améliorations apportées à un guide de programmes électronique

(30) Priority: 06.10.1999 GB 9923500
(43) Date of publication of application: 11.04.2001
(73) Proprietor: Pace Plc, Saltaire Shipley West Yorkshire BD18 3LF (GB)
(72) Inventor: Hoath, Bill, Altrincham, Cheshire WA15 0LA (GB)
(74) Representative: Wood, Graham

(56) References cited:
- EP-A- 0 721 253
- EP-A- 0 774 866
- EP-A- 0 790 738
- EP-A- 0 802 673
- EP-A- 0 889 647
- WO-A-97/18670
- WO-A-97/50251
- WO-A-98/06219

## Description

The invention to which this application relates is to an improvement to an electronic programme guide which is typically provided in relation to a television broadcast system. The electronic program guide is typically generated from data which is broadcast from a remote location to a receiver at a premises, and the guide is shown to the user of the receiver on a display screen such as a television set connected to the receiver, or in which the receiver is provided. The guide can then be referred to by the user to ascertain what programmes are on at the present or in the future, to find out details of particular programmes, order programmes through pay per view and so on.

The present invention is provided to improve the use of an electronic programme guide. It is found that as the number of available channels and programmes to watch proliferates, so the use of electronic programme guides is becoming increasingly necessary as the use of newspapers and printed listings becomes increasingly impractical. A common part of the Electronic programme guide is the generation of a grid display. The grid display comprises a time row along the top and/or bottom of the display which illustrates the time period displayed on the grid. A channel column is provided to the left and/or right of the display which indicates the channels for which the programmes are displayed. The area of the display between the rows and columns are filled portions, each of which is of a height which matches the height of a channel row and of a length which matches, with reference to the time row, the length of the particular programme. Typically each portion includes the name of the programme to be indicated to the user. This is a useful and effective way in which to illustrate to the user the largest possible number of programmes on one display, however a problem which is commonly faced is that the portions for each programme, especially if the programmes are relatively short, such as 30 minute programmes and/or the titles are relatively long, are not long enough to accommodate the title within the portion, as for example, indicated in EP 0721253. This means that either abbreviations have to be used in the portions and/or a selected word or words are used in the portion or the letter 'i' is generated to indicate that the user has to depress the appropriate button in their remote control device to discover the title. While the use of abbreviations or selected words is the best which can currently be achieved, it is found that these often have very little meaning to the user who may not be aware of the abbreviations used or what the selected words mean.

The aim of the present invention is to provide a means whereby the user of a program can view a grid of programme details and which grid comprises a number of programme portions, and to provide an indication to the user to indicate the subject matter of the programme portions, even if the title of the programme is not or only partially provided in the programme portion on the display.

In a first aspect of the invention there is provided an electronic program guide display generated on a display screen from broadcast data received from a remote source by a receiver connected to the display screen,
said display comprising a series of portions, each representative of a selectable television programme,
at least one of the portions displayed being selectable by a user provided with selection means and viewing the display, and
in response to the selection, an indication means is generated by the broadcast data receiver which is representative of the subject matter of the programme of the selected portion to the user,
**characterised in that** the indication means is in the form of at least one non-text symbol generated on screen in response to the user selection adjacent to the position of the portion selected.

Typically the indication means is provided to indicate a feature of the subject matter of the programme.

In one embodiment the indication means is in the form of at least one symbol which is generated on screen in response to a selection. The user can view the same who can then refer to a symbol key also displayed on screen, on the selection means or otherwise provided.

In an alternative embodiment, rather than or in addition to, the generation of an on screen symbol, upon a portion being selected, other forms of indication can be generated such as the programme title or subject matter is played out via speakers connected to the receiver.

In one embodiment the data which allows the generation of the indication is transmitted along with the data for the electronic programme guide to the receiver.

In one specific embodiment, the data which is received by the receiver includes a code for at least some of the received programme data which indicates the subject matter category of the programme for which the data is provided. If that programme is selected by the user from the electronic programme guide display the receiver identifies the code, refers the same to an indication means key and generates the appropriate indication means such as a symbol on the screen. Typically the symbol which is generated is displayed adjacent to the position of the programme selected, and is representative of the subject matter to the user.

In one embodiment an additional area of display is provided on the display screen for the display of the indication means.

Preferably the indication means displayed in the additional area includes unabbreviated programme information relating to the programme in the portion selected by the user.

Further preferably at least the characters of the program title in an unabbreviated form are displayed in the additional area.

Further preferably programme information such as the type of programme, the channel name, the subject matter of the programme, the actors in the programme and/or the like is also displayed in the additional area of the display screen in unabbreviated form. The information shown in the additional area can be determined by the broadcaster or it can be user determined.

Preferably the information in the said additional area changes as the user moves the cursor or "highlights" or selects different portions of the display grid, without the need for the user to select a portion, depress a request button and then wait for the generation of the further area.

Preferably at least one symbol is displayed in the additional area, the at least one symbol relating to one or more features of the programme selected.

Preferably the additional area of display is a further window adjacent to or overlapping the EPG grid.

In one embodiment the broadcaster determines the position of the further window on the EPG display. In an alternative embodiment the viewer determines the position of the further window.

Preferably the further window is an optional feature which can be selected to appear by the viewer of the EPG. Once the option has been set, the further window can appear with the EPG until the option is cancelled.

Typically the further window is displayed on the display screen without any further button selection required once a programme selection has been made.

In one embodiment indication of at least one of the portions using portion indicator means causes the generation on the display screen of a feature of the programme of the indicated portion to the user.

Preferably the portion indicator means is a cursor on the screen the movement of which across the display screen can be controlled by operation of the remote control device and rather than selection of a portion by depression of an appropriate button on the remote control, positioning of the cursor over a portion causes that portion to be "highlighted" and causes the generation of a feature of the programme of the indicated portion in accordance with the invention.

It is envisaged that the invention of this application is of particular relevance where the grid form of display is shown and will allow the user to receive an indication of the details of a selected program which, upon the basis of the indication generated they can then decide whether they wish to pursue the selected programme and attempt to find more detailed information relating to the same or to select to watch the same.

Specific embodiments of the invention are now described with reference to the accompanying drawings wherein;
Figure 1 illustrates a conventional electronic programme guide display;
Figure 2 illustrates part of the display of Figure 1 in one embodiment of the invention;
Figure 3 illustrates part of the display of Figure 1 in another embodiment of the invention;
Figure 4 is an example of a display according to an embodiment of the invention.

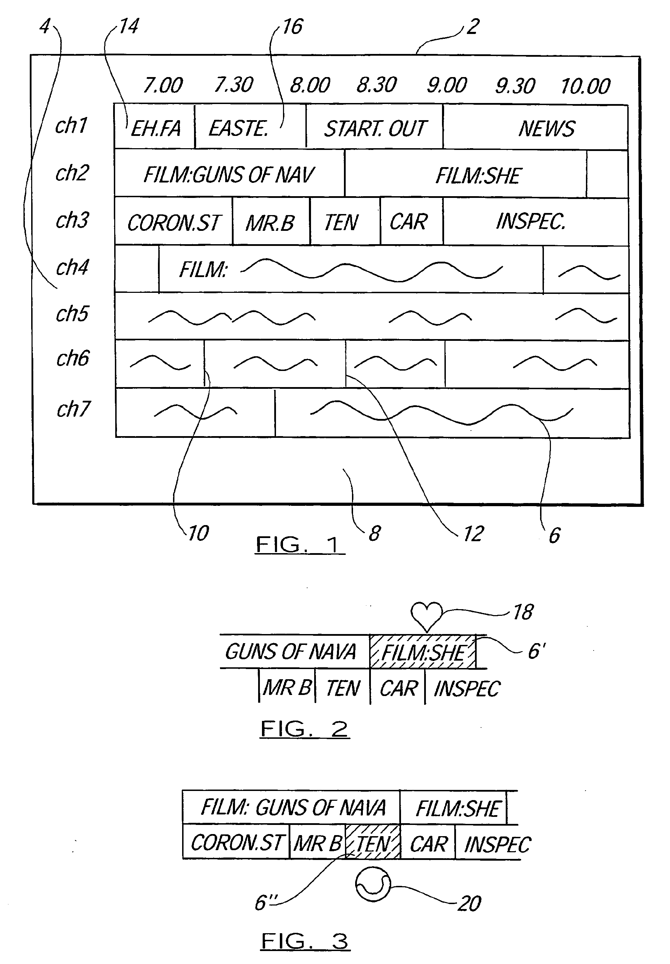

Referring firstly to Figure 1 there is illustrated one typical electronic programme guide display. The display on screen comprises a time row 2 which represents the time, in the embodiment shown, from 7-10pm. There is also illustrated a channel column 4 which illustrates a number of channels for which programmes are displayed. In the area 8 there are provided a series of portions 6, each representing a programme. The position of each portion in the vertical plane with respect to the channel column 4 illustrates the particular channel on which the programme is being displayed. The start 10 of each portion with reference to the time row 2 indicates the start time of the programme and the end 12 of each portion with reference to the time row indicates the finishing time of the programme. Each portion includes a programme title. When the programme is relatively long the title can be accommodated in the portion but if the programme is relatively short and/or the title is long, either an abbreviation 14 is required to be used or first words 16 of the programme title are required to be used. This can result in the user being unable to understand the title of the programme or identify whether they want to view the programme or not.

Figure 2 illustrates part of the display of Figure 1 wherein there is illustrated that one of the portions 6' has been selected by the user by moving the cursor on the screen to come to rest on the portion 6'. In common with conventional displays the selected programme is highlighted to differentiate the same from the others and indicate the selection and it is envisaged that the user will have used the remote control cursor keys to allow the selection of the appropriate programme portion as is conventionally performed. However in this case, and in accordance with the invention, in addition to the portion being highlighted, an indication means, in the form of a symbol 18,is displayed. In this case, as the programme is a romance, a heart symbol is displayed to the user, hence allowing them to at least identify the subject matter of the selected programme by identifying the symbol.

Figure 3 illustrates a further part of the display and in this case a portion 6" has been selected by the user and is highlighted as shown. In this case the subject matter of the selected portion is sport and so a symbol 20 in the form of a ball is displayed on screen.

The subject matter of the selected programme is identified by the receiver which receives the data for the electronic programme guide and the programmes themselves. In addition, the data includes a code which identifies the subject matter to the receiver when it is transmitted along with the other data from the remote broadcaster. Thus, when a programme is selected from the guide, the receiver will attempt to identify a subject matter code for that programme. If one has been transmitted, the code is referenced to a symbol key and the appropriate symbol for that code is identified, generated by the receiver and displayed on screen.

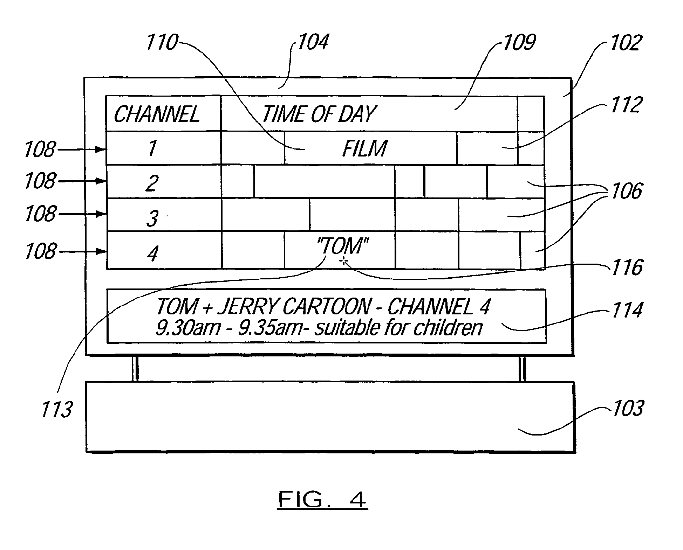

Referring to Figure 4, there is illustrated a display screen 102 displaying an electronic programme guide 104. The display screen is connected to a broadcast data receiver 103. Programme information is provided in portions/cells 106 of the grid display of programme guide 104.

Each horizontal line 108 relates to programmes on different channels. The cells 106 within a horizontal line are ordered in sequence according to the time of day at which they are to be shown. For example, cell 110 relates to programme information for a 3 hour long film, whereas cell 112 relates to a half hour soap opera series.

Cell 109 shows the time of day at which the programmes in cells 106 are shown.

A programme such as a cartoon which is typically shown for a short duration is provided in cell 113 which is too small for all the characters of the title to be displayed.

An additional area of display in the form of a further window 114 is displayed upon selection of a cell 106. The further window contains unabbreviated programme information relating to the selected cell. For example, window 114 shows unabbreviated programme information relating to cell 113 of the cartoon "Tom and Jerry".

The text of the information displayed in further window 114 can be larger than the text in the EPG, thereby allowing people with poor eyesight to view the information easily.

The text in the further window 114 and the position of the window 114 on the display screen can be determined by the broadcaster or it can be determined by the user.

It should also be appreciated that the subject matter criteria can be selected by the user and/or the broadcaster. For example, as an alternative to providing indication means to indicate subject matter, the indication means generated when a programme is selected may indicate whether the programme is acceptable for family, children or adult viewing or any other of a range of possible criteria. It should also be appreciated that it is possible that more than one symbol or combinations of the title, programme information and a symbol can be displayed when a programme is selected to illustrated to the user a range of information. It will also be appreciated that the symbol represents only one form of indication means in accordance with this invention.

It is further noted that the cell of the electronic programme guide does not require to be selected for unabbreviated programme information and/or one or more symbols to be generated, positioning of an indicator (i.e., a cursor 116) on the relevant cell without depression of a selection button may also generate programme information and/or one or more symbols.

The provision of this invention allows the user to refer to the symbol generated and/or the unabbreviated text, thereby providing the user with a clearer indication of the subject matter and nature of the programme without additional selection of alternative screens displays or the like.

## Claims

1. An electronic programme guide display generated on a display screen (102) from broadcast data received from a remote source by a receiver (103) connected to the display screen,
said display comprising a series of portions, each representative of a selectable television programme,
at least one of the portions displayed being selectable by a user provided with selection means and viewing the display, and
in response to the selection, an indication means is generated by the broadcast data receiver which is representative of the subject matter of the programme of the selected portion to the user,
**characterised in that** the indication means is in the form of at least one non-text symbol (18; 20) generated on screen in response to the user selection adjacent to the position of the portion selected.

2. An electronic programme guide according to claim 1 **characterised in that** the indication means is generated on screen (102) to visually indicate the subject matter of the programme.

3. An electronic programme guide according to claim 1 **characterised in that** the at least one symbol (18; 20) generated is/are selected from a number of symbols held in a memory of the broadcast data receiver, said selection made by the receiver with reference to the subject matter of the selected programme.

4. An electronic programme guide according to claim 1 **characterised in that** the selection of one or more symbols (18; 20) is made by the receiver (103) on the basis of data broadcast to the receiver for the selected programme.

5. An electronic programme guide according to claim 1 **characterised in that** the broadcast data includes a code for at least some of the received programme data which is identified by the receiver to generate the appropriate symbol (18; 20) by reference to a symbol key

6. An electronic programme guide according to claim 1 **characterised in that** upon a portion being selected, the indication means displayed includes the full title of the programme represented in the portion.

7. An electronic programme guide according to claim 1 **characterised in that** the indication means includes an audio transmission to the user via speakers connected to the broadcast data receiver.

8. An electronic programme guide according to claim 1 **characterised in that** the particular indication means which is generated is determined by the broadcast data receiver with reference to data transmitted with the data for the electronic programme guide to the receiver (103).

9. An electronic programme guide according to claim 8 **characterised in that** the data which is received by the receiver (103) includes a code for at least some of the programme material transmitted and the indication means generated is with reference to the code.

10. An electronic programme guide according to claim 1 **characterised in that** indication means may also be displayed in an additional area of display (114) provided on the display screen.

11. An electronic programme guide according to claim 10 **characterised in that** the additional area of display is a further window (114) on the display screen.

12. An electronic programme guide according to claim 11 **characterised in that** the position of the further window (114) is determined by the broadcaster.

13. An electronic programme guide according to claim 11 **characterised in that** the position of the further window (114) is determined by the user by user-selection of an appropriate area of rhe display.

14. An electronic programme guide according to claim 11 **characterised in that** the further window (114) is an optional feature which can be selected to appear by the user.

15. An electronic programme guide according to claim 14 **characterised in that** once selected the further window (114) is displayed on the screen (102) without any further button selection required.

16. An electronic programme guide according to claim 11 **characterised in that** the text and/or symbols in the further window (114) can be larger than the text shown in the main electronic programme guide display (104).

17. An electronic programme guide according to claim 10 **characterised in that** information displayed in the additional area changes as the user moves a cursor, "highlights" or selects different portions of the display, without the need for the user to select a portion, depress a request button and then wait for the generation of the additional area.

## Patentansprüche

1. Elektronische Programmführeranzeige, die auf einem Anzeigebildschirm (102) aus Rundfunkdaten, die ein mit dem Anzeigebildschirm (102) verbundener Empfänger (103) von einer fernen Quelle empfangen hat, generiert wird,
wobei die genannte Anzeige eine Reihe von Abschnitten umfasst, die jeweils ein auswählbares Fernsehprogramm repräsentieren,
wobei wenigstens einer der angezeigten Abschnitte von einem Benutzer, der mit einer Auswahleinrichtung versehen ist und die Anzeige betrachtet, ausgewählt werden kann, und
wobei der Rundfunkdatenempfänger als Reaktion auf die Auswahl ein Anzeigemittel generiert, das für den Benutzer das Thema des Programms des ausgewählten Abschnitts repräsentiert,
**dadurch gekennzeichnet, dass** das Anzeigemittel die Form wenigstens eines Nicht-Text-Symbols (18; 20) hat, das als Reaktion auf die Benutzerwahl neben der Position des gewählten Abschnitts auf dem Bildschirm generiert wird.

2. Elektronischer Programmführer nach Anspruch 1, **dadurch gekennzeichnet, dass** das Anzeigemittel auf dem Bildschirm (102) generiert wird, um das Thema des Programms visuell anzuzeigen.

3. Elektronischer Programmführer nach Anspruch 1, **dadurch gekennzeichnet, dass** das wenigstens eine generierte Symbol (18; 20) aus einer Anzahl von Symbolen ausgewählt wird, die in einem Speicher des Rundfunkdatenempfängers gespeichert werden, wobei die genannte Auswahl von dem Empfänger mit Bezug auf das Thema des ausgewählten Programms getätigt wird.

4. Elektronischer Programmführer nach Anspruch 1, **dadurch gekennzeichnet, dass** die Auswahl von einem oder mehreren Symbol(en) (18; 20) durch den Empfänger (103) auf der Basis von an den Empfänger gesendeten Daten für das ausgewählte Programm erfolgt.

5. Elektronischer Programmführer nach Anspruch 1, **dadurch gekennzeichnet, dass** die Rundfunkdaten einen Code für wenigstens einige der empfangenen Programmdaten aufweisen, der von dem Empfänger identifiziert wird, um das zutreffende Symbol (18; 20) durch Bezugnahme auf einen Symbolschlüssel zu generieren.

6. Elektronischer Programmführer nach Anspruch 1, **dadurch gekennzeichnet, dass** nach Auswahl eines Abschnitts das angezeigte Anzeigemittel den vollständigen Titel des in dem Abschnitt repräsentierten Programms aufweist.

7. Elektronischer Programmführer nach Anspruch 1, **dadurch gekennzeichnet, dass** das Anzeigemittel eine Audioübertragung zu dem Benutzer über mit dem Rundfunkdatenempfänger verbundene Lautsprecher aufweist.

8. Elektronischer Programmführer nach Anspruch 1, **dadurch gekennzeichnet, dass** das jeweilige Anzeigemittel, das generiert wird, von dem Rundfunkdatenempfänger mit Bezug auf Daten, die mit den Daten für den elektronischen Programmführer zu dem Empfänger (103) übertragen werden, ermittelt wird.

9. Elektronischer Programmführer nach Anspruch 8, **dadurch gekennzeichnet, dass** die Daten, die von dem Empfänger (103) empfangen werden, einen Code für wenigstens einen Teil des übertragenen Programmmaterials aufweisen, und das Anzeigemittel mit Bezug auf den Code generiert wird.

10. Elektronischer Programmführer nach Anspruch 1, **dadurch gekennzeichnet, dass** das Anzeigemittel auch in einem auf dem Anzeigebildschirm bereitgestellten zusätzlichen Anzeigebereich (114) angezeigt werden kann.

11. Elektronischer Programmführer nach Anspruch 10, **dadurch gekennzeichnet, dass** der zusätzliche Anzeigebereich ein weiteres Fenster (114) auf dem Anzeigebildschirm ist.

12. Elektronischer Programmführer nach Anspruch 11, **dadurch gekennzeichnet, dass** die Position des weiteren Fensters (114) vom Sender bestimmt wird.

13. Elektronischer Programmführer nach Anspruch 11, **dadurch gekennzeichnet, dass** die Position des weiteren Fensters (114) von dem Benutzer durch Benutzerwahl eines zutreffenden Bereichs des Displays bestimmt wird.

14. Elektronischer Programmführer nach Anspruch 11, **dadurch gekennzeichnet, dass** das weitere Fenster (114) ein fakultatives Merkmal ist, dessen Erscheinen von dem Benutzer gewählt werden kann.

15. Elektronischer Programmführer nach Anspruch 14, **dadurch gekennzeichnet, dass** das weitere Fenster (114), sobald es ausgewählt worden ist, auf dem Bildschirm (102) angezeigt wird, ohne dass eine weitere Auswahl über Tasten erforderlich ist.

16. Elektronischer Programmführer nach Anspruch 11, **dadurch gekennzeichnet, dass** der Text und/oder die Symbole in dem weiteren Fenster (114) größer als der in der Hauptanzeige des elektronischen Programmführers (104) angezeigte Text sein kann/können.

17. Elektronischer Programmführer nach Anspruch 10, **dadurch gekennzeichnet, dass** in dem zusätzlichen Bereich angezeigte Informationen sich ändern, wenn der Benutzer einen Cursor bewegt oder verschiedene Abschnitte auf der Anzeige "markiert" oder auswählt, ohne dass der Benutzer einen Abschnitt auswählen, eine Anforderungstaste drücken und dann auf die Generierung des zusätzlichen Bereichs warten muss.

## Revendications

1. Affichage d'un guide de programmes électronique généré sur un écran de visualisation (102) à partir de données diffusées reçues, depuis une source distante, par un récepteur (103) connecté à l'écran de visualisation,
ledit affichage comprenant une série de sections, chacune représentant un programme télévisé sélectionnable,
l'une au moins des sections affichées étant sélectionnable par un utilisateur disposant de moyens de sélection et visionnant l'affichage, et
en réaction à la sélection, des moyens d'indication sont générés par le récepteur de données diffusées qui sont représentatifs du sujet du programme de la portion sélectionnée par l'utilisateur,
**caractérisé en ce que** les moyens d'indication se présentent sous la forme d'au moins un symbole non textuel (18 ; 20) généré sur l'écran, en réaction à la sélection Utilisateur, se trouvant en position adjacente à la portion sélectionnée.

2. Guide de programmes électronique selon la revendication 1, **caractérisé en ce que** les moyens d'indication sont générés sur l'écran (102) afin d'indiquer visuellement le sujet du programme.

3. Guide de programmes électronique selon la revendication 1, **caractérisé en ce que** ledit au moins un symbole (18 ; 20) généré est sélectionné parmi un certain nombre de symboles conservés dans une mémoire du récepteur de données diffusées, ladite sélection étant faite par le récepteur par rapport au sujet du programme sélectionné.

4. Guide de programmes électronique selon la revendication 1, **caractérisé en ce que** la sélection d'un ou de plusieurs symboles (18 ; 20) est faite par le récepteur (103) sur la base des données diffusées vers le récepteur pour le programme sélectionné.

5. Guide de programmes électronique selon la revendication 1, **caractérisé en ce que** les données diffusées comportent un code pour au moins certaines des données de programme reçues, ce code étant identifié par le récepteur afin de générer le symbole approprié (18 ; 20) par rapport à une clé de symbole.

6. Guide de programmes électronique selon la revendication 1, **caractérisé en ce que** lors de la sélection d'une section, les moyens d'indication affichés comportent le titre complet du programme représenté dans la section.

7. Guide de programmes électronique selon la revendication 1, **caractérisé en ce que** les moyens d'indication comportent une transmission audio à l'intention de l'utilisateur par l'intermédiaire de haut-parleurs connectés au récepteur de données diffusées.

8. Guide de programmes électronique selon la revendication 1, **caractérisé en ce que** les moyens d'indication spécifiques, qui sont générés, sont déterminés par le récepteur de données diffusées par rapport aux données transmises, vers le récepteur (103), avec les données destinées au guide de programmes électronique.

9. Guide de programmes électronique selon la revendication 8, **caractérisé en ce que** les données qui sont reçues par le récepteur (103) comportent un code pour au moins certains des contenus de programme transmis et les moyens d'indication générés le sont par rapport au code.

10. Guide de programmes électronique selon la revendication 1, **caractérisé en ce que** les moyens d'indication peuvent également être affichés dans une zone additionnelle de l'affichage (114) prévue sur l'écran de visualisation.

11. Guide de programmes électronique selon la revendication 10, **caractérisé en ce que** la zone additionnelle de l'affichage est une fenêtre supplémentaire (114) sur l'écran de visualisation.

12. Guide de programmes électronique selon la revendication 11, **caractérisé en ce que** la position de la fenêtre supplémentaire (114) est déterminée par l'organisme de radio-télédiffusion.

13. Guide de programmes électronique selon la revendication 11, **caractérisé en ce que** la position de la fenêtre supplémentaire (114) est déterminée par l'utilisateur grâce à une sélection Utilisateur d'une zone appropriée de l'écran.

14. Guide de programmes électronique selon la revendication 11, **caractérisé en ce que** la fenêtre supplémentaire (114) est une caractéristique en option que l'utilisateur peut sélectionner pour qu'elle s'affiche.

15. Guide de programmes électronique selon la revendication 14, **caractérisé en ce qu'**après avoir été sélectionnée, la fenêtre supplémentaire (114) est affichée sur l'écran (102) sans qu'il soit nécessaire de sélectionner un autre bouton.

16. Guide de programmes électronique selon la revendication 11, **caractérisé en ce que** le texte et/ou les symboles présents dans la fenêtre supplémentaire (114) peuvent avoir une taille plus grande que celle du texte présenté dans l'affichage principal du guide de programmes électronique (104).

17. Guide de programmes électronique selon la revendication 10, **caractérisé en ce que** les informations affichées dans la zone additionnelle changent au fur et à mesure que l'utilisateur déplace un curseur, "met en surbrillance" ou sélectionne différentes sections de l'affichage sans que l'utilisateur ait besoin de sélectionner une section, d'appuyer sur un bouton de requête et puis d'attendre la génération de la zone additionnelle.
